Europäisches Patentamt

European Patent Office

Office européen des brevets

(11) Veröffentlichungsnummer: **0 185 396**
**B1**

(12) **EUROPÄISCHE PATENTSCHRIFT**

(45) Veröffentlichungstag der Patentschrift: **08.08.90**

(21) Anmeldenummer: **85116406.1**

(22) Anmeldetag: **20.12.85**

(51) Int. Cl.⁵: **D 21 H 27/00,** G 06 K 19/08,
D 01 D 5/30, D 04 H 3/00,
G 07 D 7/00

(54) **Sicherheitsdokument mit darin eingelagertem Sicherheitsfaden und Verfahren zur Herstellung und Echtheitsprüfung des Sicherheitsdokuments.**

(30) Priorität: **21.12.84 DE 3446861**

(43) Veröffentlichungstag der Anmeldung:
**25.06.86 Patentblatt 86/26**

(45) Bekanntmachung des Hinweises auf die
Patenterteilung:
**08.08.90 Patentblatt 90/32**

(84) Benannte Vertragsstaaten:
**AT BE CH DE FR GB IT LI LU NL SE**

(56) Entgegenhaltungen:
**EP-A-0 037 507**
**EP-A-0 092 691**
**WO-A-84/00351**
**DE-A-2 148 540**
**DE-A-2 148 540**
**DE-A-2 754 267**
**DE-A-2 919 576**
**DE-C- 677 711**
**DE-C-2 037 755**

(73) Patentinhaber: **GAO Gesellschaft für
Automation und Organisation mbH
Euckenstrasse 12
D-8000 München 70 (DE)**

(72) Erfinder: **Kaule, Wittich, Dr. Dipl.-Phys.
Lindacher Weg 13
D-8080 Emmering (DE)**
Erfinder: **Schwenk, Gerhard, Dr. Dipl.-Chem.
Edelweissstrasse 20
D-8039 Puchheim (DE)**
Erfinder: **Moll, Jürgen, Dr. Dipl.-Chem.
Perlacher Strasse 4
D-8022 Grünwald (DE)**
Erfinder: **Stenzel, G., Dr. Dipl.-Phys.
Schiessstättstrasse 6
D-8000 München 2 (DE)**

(74) Vertreter: **Klunker . Schmitt-Nilson . Hirsch
Winzererstrasse 106
D-8000 München 40 (DE)**

Courier Press, Leamington Spa, England.

## Beschreibung

Die Erfindung betrifft ein Sicherheitsdokument mit einem im Inneren des Dokuments eingelagerten Sicherheitsfaden, der visuell im Auf- und Durchlicht erkennbar ist und bestimmte physikalische Eigenschaften aufweist sowie Verfahren zur Herstellung und Prüfung des Sicherheitsdokuments und des Sicherheitsfadens.

Zur Verhinderung von Fälschungen ist es bekannt, Sicherheitsdokumente, wie z.B. Wertpapiere, Ausweiskarten etc., mit sogenannten Sicherheitsfäden auszustatten. Bei der Herstellung eines Wertpapiers werden diese Sicherheitsfäden während des Blattbildungsvorgangs in das Innere des Papierblatts eingebracht. Dabei wird der Faden üblicherweise so eingebettet, daß er vollständig von Papierfasern umgeben ist (GB—A—8242 (1839), DE—U—72 18 681).

Es ist außerdem bekannt, das Wertpapier so zu präparieren oder den Faden so einzubetten, daß er partiell freiliegt und somit an diesen Stellen direkt visuell sichtbar bzw. zugänglich ist (DE—A—27 43 019). Die speziellen optischen Eigenschaften eines Sicherheitsfadens sind bei derartiger Einbettung besonders gut und einfach zu überprüfen.

Aus der DE—A—21 56 888 ist u.a. auch bekannt, Netze oder Einzelfäden aus thermoplastischem Material in Wertpapiere einzubringen. Man bedient sich dabei thermoplastischer Materialien, deren Schmelzpunkt unterhalb 160°C liegt. Da während der Fertigung des Papiers, z.B. bei der Trocknung, diese Temperaturen erreicht werden, schmelzen diese Thermoplaste, und die Netze reduzieren sich dabei zu einzelnen Inseln aus thermoplastischem Material, die fest mit der Papiersubstanz verbunden sind.

Zur Feststellung der Echtheit eines mit einem Sicherheitsfaden ausgestatteten Wertpapiers wird das Papier üblicherweise durch Betrachtung im Auf- und Durchlicht auf das Vorhandensein des Sicherheitsfadens und dessen Lage im Papier geprüft. Aufgeklebte oder aufgemalte Sicherheitsfäden sind dabei sehr gut von echten bei der Papierherstellung eingebrachten Sicherheitsfäden zu unterschieden.

Bei Wertpapierfälschungen, bei denen der Sicherheitsfaden zwischen zwei fertige Papierlagen eingeklebt wird, entspricht der visuelle Eindruck unter Umständen zwar dem eines Wertpapiers mit einem in situ eingebrachten Sicherheitsfaden. Eine derartige Fälschung ist aber wegen der unterschiedlichen Papiereigenschaften (Steifigkeit, Auftrennfestigkeit etc.) und der daraus resulierenden abweichenden "Griffigkeit" von echten Banknoten leicht zu unterscheiden.

Um Sicherheitsfäden auch maschinell prüfen zu können, ist es bekannt, Fäden mit bestimmten physikalischen Eigenschaften zu verwenden, aufgrund derer die Fäden in geeigneten Prüfvorrichtungen identifizierbar sind. Derartige Sicherheitsfäden sind z.B. Fäden mit bestimmten magnetischen, elektrischen oder fluoreszierenden Eigenschaften (DE—C—16 96 245, US—A—2,143,406).

Aus der DE—A—27 54 267 ist ein Sicherheitspapier mit einem darin eingelagertem Sicherheitsfaden bekannt, der neben einem magnetischen Material mindestens eine weitere, ebenfalls maschinell prüfbare Substanz enthält, wie z.B. ein lumineszierendes Material, ein Röntgenstrahlabsorbens oder ein Metall. Diese verschiedenen Eigenschaften lassen sich dann in voneinander unabhängig durchführbaren Prüfungen feststellen. Diese Sicherheitsmerkmale können übereinanderliegend und in einem bestimmten Muster entlang des Sicherheitsfaders angebracht sein.

Ein Sicherheitsfaden mit einem visuell prüfbaren Echtheitsmerkmal ist aus der EP—A—0 037 507 bekannt. Dieser bekannte Sicherheitsfaden wird durch Ziehen eines Metall- oder Kunststoffadens durch ein Kalibrierwerkzeug erzeugt, wobei durch die Form des Kalibrierwerkzeugs der Faden eine für das Werkzeug typische Querschnittsform und Oberflächenriffelierung erhält. Anhand dieser Konturen kann nach Einlagerung des Sicherheitsfadens in das Dokument der Faden identifiziert werden und damit die Echtheit des Dokuments festgestellt werden.

Die Prüfung der bekannten Sicherheitsdokumente mit Sicherheitsfäden richtet sich daher üblicherweise auf eine visuelle und/oder maschinelle Prüfung, bei der geklärt wird, ob überhaupt ein Sicherheitsfaden eingelagert ist und gegebenenfalls im zweiten Schritt, ob dieser auch die geforderten physikalischen Eigenschaften aufweist.

Da Sicherheitsfäden per Definition bereits ohne Hilfsmittel lokalisierbar sein sollen und gegebenenfalls unter Zerstörung des Wertpapiers von diesem relative einfach entfernt werden können, sind sie Analyseangriffen in besonderem Maße ausgesetzt. Um Fälschungen in verstärktem Maß entgegenzuwirken, sollte daher der Sicherheitsfaden neben einer besonderen physikalischen Eigenschaft und der aufwendigen Einbettung ins Papier wenn möglich auch selbst aufwendig herstellbar und für Fälscher schwer nachempfindbar sein. Trotz dieser Forderung sollte aber der wirtschaftlichen industriellen Fertigung derartiger Sicherheitsfäden nichts im Wege stehen.

Die Aufgabe der vorliegenden Erfindung besteht daher darin, ein Sicherheitsdokument mit einem Sicherheitsfaden zu schaffen, der — obwohl er industriell in großen Mengen wirtschaftlich herstellbar ist — neben den üblichen Prüfmöglichkeiten bezüglich weiterer fadenspezifischer kriterien überprüfbar ist, so daß die Nachbildung für Fälscher im erhöhten Maß erschwert wird.

Die Aufgabe wird durch die im Kennzeichen des Hauptanspruchs enthaltenen Merkmale gelöst.

Der Erfindung liegt der Gedanke zugrunde, einen Sicherheitsfaden zu schaffen, dessen Eiganschaften fest mit der Fadenstruktur und -erzeugung verbunden sind, so daß ein Fälscher beim Versuch diesen nachzubilden, gezwungen ist, auch auf die aufwendige, spezielle Herstellungstechnologien zur Erzeugung von Fäden zurückzugreifen.

Der erfindungsgemäße Faden weist in einer bevorzugten Ausführungsform zumindest drei längs des Fadens verlaufende, exakt parallel zueinander angeordnete Streifen auf, die sich in ihrem physikalischen Verhalten, wie z.B. in ihrer Farbe, ihrer fluoreszierenden oder magnetischen Eigenschaften, unterscheiden.

Ein Dokument mit einem derartigen Sicherheitsfaden zeichnet sich deswegen durch eine hohe Fälschungssicherheit aus, da die Bereiche des Sicherheitsfadens mit den unterschiedlichen physikalischen Eigenschaften lokal getrennt in einer bestimmten geometrischen Zuordnung zueinanderliegen. Einem Fälscher stellen sich daher im wesentlichen drei Hürden, da er nun sowohl die verschiedenen physikalischen Eigenschaften nachzuahmen, als auch die exakte geometrische Zuordnung der Merkmale zueinander soweie die notwendige Einbettung im Papier zu erfüllen hat.

Da die einzelnen Bereiche parallel zur Oberfläche des Dokuments liegen und somit einzeln in seriellen Folge durch Abtastung entlang einer Oberfläche des Dokuments detektiert werden können und der Abstand zwischen den einzelnen Bereichen eine exakte, konstant über den gesamten Faden verlaufende, Größe ist, können nun auch neben den physikalischen Eigenschaften, z.B. die Breite der einzelnen Bereiche und die Abstände zueinander, als meßtechnisch erfaßbare Prüfkriterien dienen. Durch entsprechende Kombination verschiedener Prüfkriterien, die auf die unterschiedlichen Eigenschaften und deren exakte geometrische Zuordnung basieren, kann bei vertretbarem Mehraufwand auf Seiten der Prüfeinrichtung der auf Seiten des Fälschers notwendige Mehraufwand auf ein Vielfaches erhöht werden.

Weiterhin ergeben sich für den Sicherheitsfaden besondere farbliche Gestaltungsmöglichkeiten, wodurch auch das optische Erscheinungsbild eines Wertpapiers sehr wesentlich beeinflußt werden kann. Wird ein derartiger Sicherheitsfaden z.B. in den jeweiligen Landesfarben längsgestreift in Banknotenpapier eingebracht, so erhält diese Banknote nicht nur durch das Druckbild, sondern nun auch durch das derart farbig gekennzeichnete Papier selbst eine nationale Prägung. Die streng kantenparallel verlaufende farbliche Kennzeichnung des Fadens gibt der Banknote außerdem ein ästetisch ansprechendes Erscheinungsbild.

Vorzugsweise werden für das erfindungsgemäße Sicherheitspapier Kunststoffäden verwendet, die nach der aus der Kunststoffverarbeitung bekannten Coextrusionstechnik hergestellt werden. Diese Technik gestattet es, einen aus mehreren Komponenten bestehenden Einzelfaden herzustellen, wobei die einzelnen Komponenten nebeneinander liegen und dieser Aufbau in seiner Geometrie über die gesamte Fadenlänge exakt konstant bleibt.

Die einzelnen Komponenten bestehen vorzugsweise aus dem gleichen Kunststoffmaterial, um eine Kräuselung des so hergestellten Fadens zu verhindern.

Unter Beimischung von Zusätzen können den einzelnen Komponenten bestimmte physikalische Eigenschaften verliehen werden. Derartige Zusätze können erfindungsgemäß Farbstoffe, Fluoreszenzstoffe, Partikel mit elektrischen oder magnetischen Eigenschaften etc. sein.

Die Coextrusionstechnik hat den Vorteil, daß hier quasi ein Einzelfaden hergestellt werden kann, obwohl er im Volumen mit verschiedenen Zustatzstoffen durchsetzt ist, die dem Faden z.B. bestimmte Farben und/oder andere physikalische Eigenschaften geben. Die in das Volumen in entsprechend hohen Konzentrationen einbringbaren Zusatzstoffe sind außerdem gezielt bestimmten Volumenbereichen zugeordnet. Ein derartiger Sicherheitfaden läßt sich daher sowohl vom geometrischen Aufbau als auch von der signalausbeute her stets eindeutig von z.B. lokal beschichteten Fäden unterscheiden.

Eine Alternative zur Coextrusionstechnik besteht darin, zunächst separat extrudierte Einzelfäden mit den bestimmten physikalischen Eigenschaften herzustellen und diese vor Einbringung in das Papier oder das Dokument miteinander der zu verbinden. Bestehen alle Einzelfäden aus Kunststoff, so könnten sie — sofern die Schmelzpunkte der Kunststoffmaterialien nicht zu stark variieren — unter Wärme und Druck in einer speziellen Kaschieranlage ebenfalls fest miteinander verbunden werden.

Mit den o.g. Verfahren lassen sich extrem schmale Fäden (Bruchteile von einem Millimeter) herstellen, die lokal exakt getrennte Bereiche unterschiedlicher physikalischer Natgur aufweisen, bei denen sich die Bereiche zudem in einer fest vorgegebenen geometrischen Anordnung über die ganze Fadenlänge erstrecken.

Aufgrund der hohen Präzision und der möglichen geringen Fadenbreite ist die Herstellung mit einfachen Mitteln nicht möglich. Ein Fälscher ist daher zur Nachbildung dieser Fäden gezwungen, die finanziell aufwendige und viel know-how erfordernde Extrusionstechnik anzuwenden. Der Versuch, diese Fäden nachzubilden, kann weiter erschwert werden, wenn für die Einzelfäden eines zusammengesetzten Fadens bzw. die einzelnen Komponenten eines coextrudierten Fadens nicht handelsübliche Basismaterialien oder Zusätze verwendet werden.

Die erfindungsgemäßen Fäden werden vorzugsweise so in ein Dokument einebracht, daß sie zumindest partiell direkt visuell sichtbar sind. Bei Wertpapieren kann z.B. die Fadeneinführung in die Papiermasse bei der Herstellung so gesteuert werden, daß der Faden alternierend an der Oberfläche des fertigen Blatts zu liegen kommt. Ein entsprechendes Verfahren wird in der DE—C—341 970 beschrieben. Andere Verfahren, die das gleiche Ziel haben, werden in der eingangs zitierten DE—A—27 43 019 beschrieben.

Bei Ausweiskarten, die üblicherweise aus mehreren Schichten bestehen, wird der Faden vorzugsweise unter einer transparenten Deckschicht angeordnet.

Bestehen die angrenzenden Schichten der Karte aus einem zum Kunststoffmaterial des Sicherheitsfadens artverwendten Material, so erreicht man beim Kaschiervorgang eine innige Verbindung zwischen dem Sicherheitsfaden und den benachbarten Schichten.

Weitere Vorteile und vorteilhafte Weiterbildungen sind Gegenstand der Unteransprüche und Inhalt der nachfolgenden detaillierten Beschreibung des Erfindungsgegenstandes anhand der Figuren.

Die Fig. zeigen:

Fig. 1 ein erfindungsgemäßes Dokument in der Aufsicht,

Fig. 2 einen Schnitt durch das erfindungsgemäße Dokument entlang der Linie 2—2 der Fig. 1,

Fig. 3 ein Beispiel für einen Coextrusionskopf,

Fig. 4a—e Beispiele für verschiedene Querschnittsstrukturen erfindungsgemäßer Sicherheitsfäden,

Fig. 5 eine Kaschieranlage zur Herstellung erfindungsgemäßer Sicherheitsfäden,

Fig. 6 eine Prüfvorrichtung zur Echtheitserkennung eines erfindungsgemäßen Dokuments,

Fig. 7 ein Diagramm zum Verlauf des Prüfsignals,

Fig. 8 eine weiter vorteilhafte Ausführungsform einer Prüfvorrichtung,

Fig. 9 ein Prüfsignal bei Schräglagentransport.

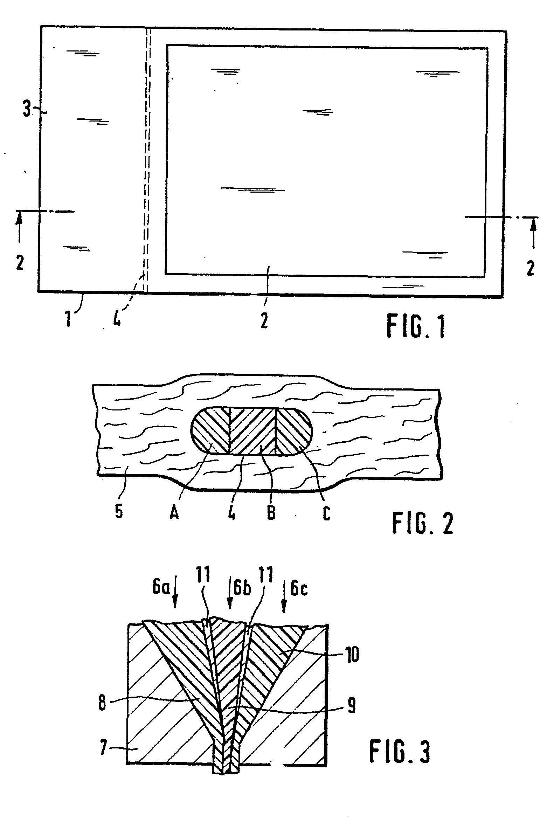

In der Fig. 1 ist ein Sicherheitsdokument 1 in Form einer Banknote gezeigt, das ein Druckbild 2 und ein unbedrucktes sogennantes Weißfeld 3 aufweist, in das überlicherweise ein Wasserzeichen eingebracht ist. Im Innern des Dokuments ist ein Sicherheitsfaden 4 eingelagert, der parallel zur kürzeren Kante der Banknote verläuft.

Erfindungsgemäß weist der Sicherheitsfaden mehrere sich über die gesamte Fadenlänge homogen erstreckende Bereiche auf, die sich in ihrem physikalischen Verhalten unterscheiden.

In der Fig. 2 ist eine mögliche Querschnittsform eines in einem Wertpapier 5 eingebetteten Fadens 4 gezeigt (Schnittlinie 2—2 der Fig. 1). Der Faden besteht aus drei Komponenten A, B und C, die sich in ihren physikalischen Eigenschaften, z.B. bezüglich ihrer spektralen Remissions- bzw. Transmissionseigenschaften, fluoreszierender und/oder magnetischer Eigenschaften, unterscheiden. Die Komponenten A, B, C sind im Volumen des Sicherheitsfadens, d.h. in einer durch drucktechnische Mittel nicht nachbildbaren Konzentration, vorgesehen. Sie sind in scharf voneinander abgegrenzten längsparallelen Bereichen in eindeutiger und genau definierter Zuordnung zueinander angeordnet.

Derartige Fäden lassen sich vorzugsweise nach der aus der Kunststofftechnik bekannten Coextrusionstechnik herstellen ("Synthesefasern" Béla v. Falkai, Verlag Chemie 1982, Seiten 124—126).

In der fig. 3 ist schmatisch ein Extruderkopf für die Erzeugung eines in Fig. 2 gezeigten Trikomponentenfadens gezeigt. Über drei Kanäle 6a, b, c, werden dem Extruderkopf 7 unterschiedliche, durch Trennwände 11 getrennte, Kunststoffmaterialien 8, 9, 10, die mit unterschiedlichen Zusätzen vermengt sind, zugeführt. Die Kunststoffmaterialien liegen in den jeweiligen Vorratsbehältern auf die jeweilige Schmelztemperatur erhitzt im flüssigen Zustand vor. Unter Druckeinwirkung werden sie gleichzeitig aus den einzelnen Düsenbereichen gepreßt und im Berührungsbereich miteinander verschmolzen. Das Endprodukt ist ein einzelner Faden, der je nach Profil der Ausgangsdüse z.B. einen rechteckigen oder ovalen Querschnitt aufweist und im vorliegenden Beispiel aus drei verschiedenen Komponenten besteht, die nebeneinander angeordnet sind.

Vorzugsweise werden für die Herstellung von Bi- und Mehrkomponentenfäden mit Seite an Seite-Anordnung Polymerpartner verwendet, die bei der für die Coextrusion notwendigen Temperatur dieselbe Schmelzviskosität besitzen sowie eine so hohe Affinität aufweiden, daß die Halftung der beiden Querschnittshälften ohne zusätzliche Maßnahmen gesichert ist. Den Basismaterialien für einen solchen Faden werden bereits die Füllstoffe, Farb-, Magnet-, Metall-Pigmente und/oder lösliche Farbstoffe beigemischt, um den einzelnen Komponenten die gewünschten physikalischen Eigenschaften zu geben. Der Mehrkomponentenfaden, der sich dann unmittelbar am Düsenkopf bildet, wird durch eine geeignete Abzugsgeschwindigkeit des Fadens aus dem Düsenkopf und einer darauffolgenden Kühlung soweit verfestigt, daß keine Verzüge im Muster auftreten und ein Ineinanderfließen der Komponenten auszuschließen ist. Die Abzugsgeschwindigkeit ist bekanntlich abhängig von der Art des Polymers, der Extrusionstemperatur, der Art der Düsengeometrie etc. und kann durch entsprechende Variation dieser Parameter geeignet gewählt werden.

Der Mehrkoponentenfaden kann auch nachträglich durch gezieltes Erwärmen wieder soweit erweicht werden bzw. die Abkühlung kann in einem bestimmten Stadium gezielt unterbrochen werden, daß er in andere Querschnittsformen, z.B. ausgehend von einem ovalen Querschnitt mit niedrigem Dicken-/Breitenverhältnis, zu einem flachen Band mit extremen Dicken-/Breitenverhältnis durch Kalandern verformt werden kann.

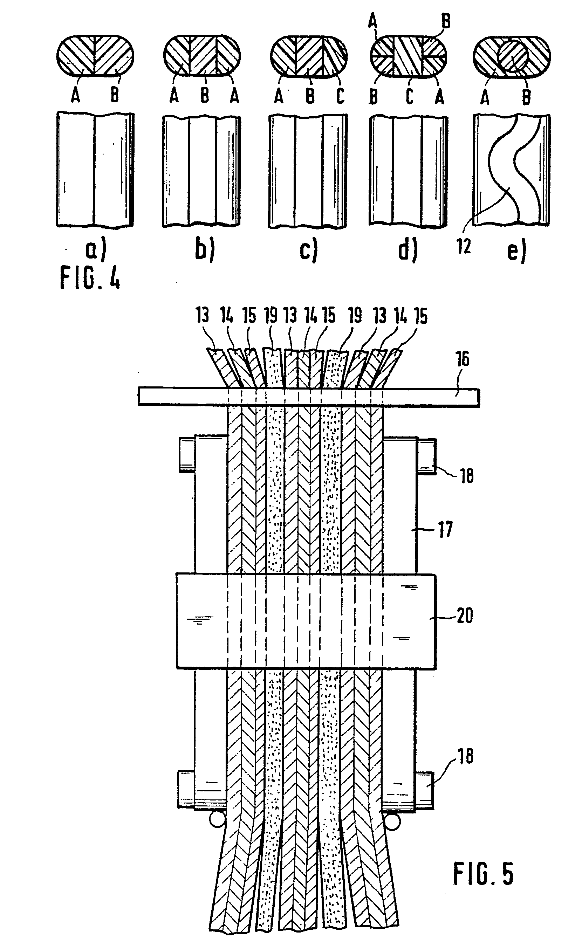

Bezüglich des Aufbaus und der Gestalt der Sicherheitsfäden ergibt sich eine Vielzahl von Kombinationsmöglichkeiten. In den Fig. 4a—e sind einige vorteilhafte Ausführungsformen gezeigt.

In Fig. 4a ist beispielsweise der Querschnitt eines Bikomponentenfadens dargestellt. Die Komponenten A und B sind unterschiedlich gefärbt, wiesen unterschiedliche magnetische oder auch fluoreszierende Eigenschaften auf.

Die Fig. 4b zeigt einen Dreikomponenten-Faden, bei dem die Randstreifen die gleichen physikalischen Eigenschaften aufweisen. Der mittlere Streifen ist mit einer zu den Randstreifen meßbar kontrastierenden physikalischen Eigenschaft ausgestattet. Eine derartige ABA-Codierung kann ebenfalls zusätzlich zu den meßtechnisch erfaßbaren Eingenschaften derart eingefärbt sein, daß die Bereiche auch visuell gut unterschiedbar sind. Die Einfärbung der Bereiche kann sich dabei mit der Anordnung der physikalischen Eigenschaften decken, so daß bei einer ABA-Codierung z.B. die Einfärbungen Farbe 1/Farbe 2/Farbe 1 vorliegen. Die visuell erkennbare Einfärbung muß aber nicht zwangsläufig mit der physikalischen Kennzeichnung übereinstimmen. Ein Abweichen davon ist sogar besonders empfehlenswert, wenn die physikalischen Eigenschaften selbst visuell nicht überprüfbar, wie z.B. magnetisch, elektrisch leitfähig, unsichtbar fluoreszierend oder dergleichen, sind. Ein Fälscher würde nämlich hinter gleichen Farben gleiche physikalische Eigenschaften vermuten und den Faden dementsprechend nachbilden.

In der Fig. 4c ist ein Dreikomponentenfaden gezeigt, bei dem sich alle drei Koponenten in ihrem physikalischen Verhalten unterschieden. Auch hier ist es möglich, zusätzlich zur farblichen Gestaltung des Fadens die einzelnen Komponenten mit visuell nicht sichtbaren Eigenschaften zu versehen, um ihn mit einer weiteren maschinell prüfbaren Codierung auszustatten.

In der Fig. 4d ist ein Faden gezeigt, dessen äußere Komponenten sich aus zwei Lagen, z.B. unterschiedlich gefärbter Kunststoffschichten A und C zusammensetzen. Ist die Komponente A z.B. rot, die Komponente B weiß und die Komponente C gelb eingefärbt, so zeigt der Faden bei Betrachtung im Auflicht die Farbcodierung rot-weiß-gelb oder umgekehrt. Bei Betrachtung im Durchlicht hingegen ist die Farbcodierung orange-weiß-orange.

Schließlich zeigt die Fig. 4e eine Fadenstruktur, bei der die innere Komponente B eine kreisförmigen Querschnitt aufweist. Der Zufluß der Komponente B in den Extruderausgang erfolgt dabei über eine Ringdüse. Hier, wie auch in den anderen Beispielen, ist es möglich, die Zuflußdüse für die mittlere Komponente beweglich zu gestalten. Führt diese während des Extrusionsvorgangs z.B. eine Pendelbewegung aus, so beschreibt die innere Komponente des Sicherheitsfadens 12 eine Schlangenlinie.

Eine Alternative zur Coextrusionstechnik besteht darin, zunächst mehrere Einzelfäden herzustellen und diese anschließend zu einem Mehrkomponentenfaden zu verbinden. Auch auf diese Weise lassen sich Fäden produzieren, die die obengenannten Eigenschaften bezüglich der geometrischen Abmaße und des unterschiedlichen physikalischen Verhaltens aufweisen und sich somit für die Herstellung eines erfindungsgemäßen Sicherheitspapiers eignen.

Vorzugsweise werden für die Einzelfäden wiederum extrudierte Kunststoffäden verwendet, die je nach Auflage mit bestimmten Füllstoffen, Farb-, Magnet- Metall-Pigmenten und/oder löslichen Farbstoffen versetzt sind. Wie bei der Coextrusionstechnik ergibt sich auch hier eine Vielzahl von Kombinationsmöglichkeiten bezüglich der Zusammenstellung der Fäden aus mehreren unterschiedlich präparierten Einzelfäden. Aufbauten, wie sie in Fig. 4a—d gezeigt sind, sind auch mit dieser Herstellungstechnik möglich.

In der Fig. 5 ist eine Vorrichtung gezeigt, mit Hilfe derer gleichzeitig mehrere aus unterschiedlichen Einzelfäden bestehende Mehrkomponentenfäden hergstellt werden können.

Die verschiedenfarbigen Komponenten des zu produzierenden Sicherheitsfadens werden als Einzelfäden 13, 14 und 15 mit rundem bzw. ovalem Querschnitt durch Extrusion separat hergestellt und auf Spulen gewickelt. Das Zusammenführen der Fäden zu einem z.B. mehrfarbigen Band erfolgt in der Weise, daß die einzelnen Fäden durch Führungsleisten 16 gezogen werden und auf einer Trägerfolie 17, einem über Umlenkrollen 18 laufenden Endlosband mittels Haftkleber fixiert werden. Wichtig dabei ist, daß die Einzelfäden parallel auf die Trägerfolie auflaufen und berührend auf ihr fixiert werden. Die Verbindung der einzelnen Fäden zu einem mehrfarbigen Band erfolgt durch Kaschieren in einer entsprechenden Kaschiervorrichtung 20 bei erhöhter Temperatur, wobei die nebeneinander liegenden verschiedenen Einzelfadensätze durch Trennbänder 19 mit wesentlich höherem Erweichungspunkt als die zu erzeugenden mehrkomponentigen Sicherheitsfäden voneinander isoliert sind. Die gleichen thermischen Eigenschaften wie die Trennbänder hat sinnvollerweise auch die Trägerfolie aufzuweisen. Auf diese Art hergestellte Sicherheitsfäden lassen sich nach dem Kaschieren von der Trägerfolie abziehen und separat aufgespult.

Als Trägerfolie und Trennbänder eignen sich Kunststoffe mit hohem Erweichungspunkt und geringer Affinität zu den verwendeten Einzelfäden, wie z.B. Teflon® Hostafan® usw.

Die Fäden werden bevorzugt aus Polymeren hergestellt, die untereinander eine hohe Affinität aufweisen und sich durch einen niedrigen Erweichungspunkt auszeichnen, wie z.B. Copolymere auf der Basis von Polyamiden, Akrylaten und Polyäthylenen.

Bestehen die Einzelfäden aus nichtkaschierbaren Materialien, so ist es möglich, diese Fäden oder zumindest die später innen zu liegenden kommenden Fäden mit einer Klebstoffschicht zu versehen und dann miteinander zu verbinden.

Im folgenden werden Beispiele für mögliche unterschiedliche Dotierungen der einzelnen Volumenbereiche von beispielsweise Dreikomponentenfaden gegeben.

### Beispiel 1

Das Polymergemisch, z.B. co-polymerisiertes Polyamid "Akulon®" der Firma Akzoplastiks wird auf drei Extruder verteilt und das Granulat aufgeschmolzen. Den Schmelzen der später äußeren Komponenten des Fadens mischt man jeweils drei Gewichtsprozent von Europium-Tris-(dibenzoylmethan) derart zu, daß es sich in der Polyamidschmelze auflöst und darin somit homogen verteilt.

Nach der Extrusion der Mehrkomponentenfäden erhält man einen Sicherheitsfaden, dessen beide Randstreifen bei Anregung unter UV-Beleuchtung rot fluoreszieren, während der Mittelstreifen keine Fluoreszenz aufzeigt. Darüber hinaus können die einzelnen Fadensegmente mit sichtbaren Farbstoffen bzw. Pigmenten angefärbt werden, wobei nur sichergestellt werden muß, daß der verwendete Farbstoff im Bereich der Fluoreszenz-Emissionslinie transparent ist.

### Beispiel 2

Man verfährt wie in Beispiel 1 beschreiben, nur daß in diesem Fall zwei Segmente des Fadens mit verschiedenen Merkmalsstoffen ausgestattet werden. Als erste Kodierung verwendet man z.B. 3% Nilblau aus der Reihe der Oxazinfarbstoffe (Firma Eastmen, Flukka) und als zweite Kodierungskomponente Lumilux® CDEK80/24 der Firme Riedel de Haen in einer Konzentration von 4%.

Man erhält so z.B. einen Faden, dessen beide Randstreifen je nach Anregung unterschiedliche Fluoreszenzen aufweist. Bei Anregung mit sichtbarem Licht bewirkt Nilblau eine Fluoreszenz im nahen Infrarotgebiet, während Anregung im UV-Bereich eine grüne Fluoreszenz der zweiten Kodierungskomponenten bewirkt.

### Beispiel 3

Man verfährt wie in Beispiel 1 beschreiben, nur daß in diesem Fall alle drei Segmente des Fadens eine Kodierung erhalten.

Die beiden Randstreifen werden analog Beispiel 1 mit einem Gewichtsprozent Europium-Tris(Thenoyltrifluraceton) versetzt und der Mittelstreifen mit fünf Gewichtsprozent Lumogen® hellgelb LT (BASF). Nach der Extrusion erhält man einen Faden, der unter UV-Beleuchtung eine starke gelbe Fluoreszenz über die ganze Breite aufweist. Die rote Fluoreszenz der beiden Randstreifen wird vom menschlichen Auge nicht wahrgenommen, kann aber durch einen entsprechenden Sensor nachgewiesen werden.

### Beispiel 4

Man verfährt wie in Beispiel 1 beschrieben, jedoch anstelle der zugemischten Europiumverbindung treten fünf Gewichtsprozent Magnetpigment Nr. 8200 von Bayer, welches den Polymergemischen zugefügt wird, die die beiden äußeren Extruderdüsen beliefern.

Man erhält somit einen Mehrkoponentenfaden, dessen äußere Randstreifen magnetisch sind. Neben der magnetischen Codierung können auch hier die einzelnen Fadensegmente mit sichtbaren Farbstoffen bzw. Pigmenten angefärbt werden.

Neben den genannten Beispielen ist es z.B. möglich, die Randstreifen eines dreikomponentigen Fadens mit einem Fluoreszenzstoff zu dotieren, der bei UV-Anregung eine Emission im visuellen Bereich aufweist, die exakt im Anregungsspektrum der Fluoreszenzstoffe des Mittelstreifens liegt, dessen Emission jedoch z.B. im IR-Bereich meßbar ist. Bei der Prüfung ist darauf zu achten, daß außer dem für die Fluoreszenzanregung benötigten UV-Lichtes jedes Fremdlicht, das zur Anregung der Mittelstreifen beitragen könnte, vermieden wird, so daß der Mittelbereich des Sicherheitsfadens nur mit Licht bestrahlt wird, das von den Randstreifen erzeugt wird. Eine Fluoreszenzemission in dem Mittelstreifen kann bei derartiger Prüfung nur von den Randstreifen angeregt sein, was eine Bestätigung der geforderten Stoffzusammensetzung bzw. der gewünschten Fluoreszenzeigenschaften des Sicherheitsfadens ist.

Für die beschriebenen gegenseitigen Fluoreszenzanregungen ist eine gute optische Kopplung zwischen den einzelnen Komponenten notwendig, da die für Anregung des zweiten Fluoreszenzstoffes benötigte Fluoreszensemission des ersten Stoffes in der Regel sehr gering ist.

Coextrudierte Fäden zeichnen sich wegen der innigen Verbindung ohne zusätzliche Bindemittel durch eine sehr gute optische Kopplung zwischen den einzelnen Komponenten aus, daß sich gerade diese Fäden zur Realisierung der obengenannten Beispiele sehr gut eignen. Bei auf andere Weise hergestellten Sicherheitsfaden fehlt diese innige Kopplung, wodurch selbst bei Verwendung der richtigen Lumiphore der erwartete Erfolg ausbleibt.

Das erfindungsgemäße Sicherheitsdokument (Banknote, Ausweiskarte oder dergleichen) kann bezüglich des Sicherheitsfadens, wie bereits angedeutet, auf vielfache Weise auf seine Echtheit bzw. Originalität geprüft werden.

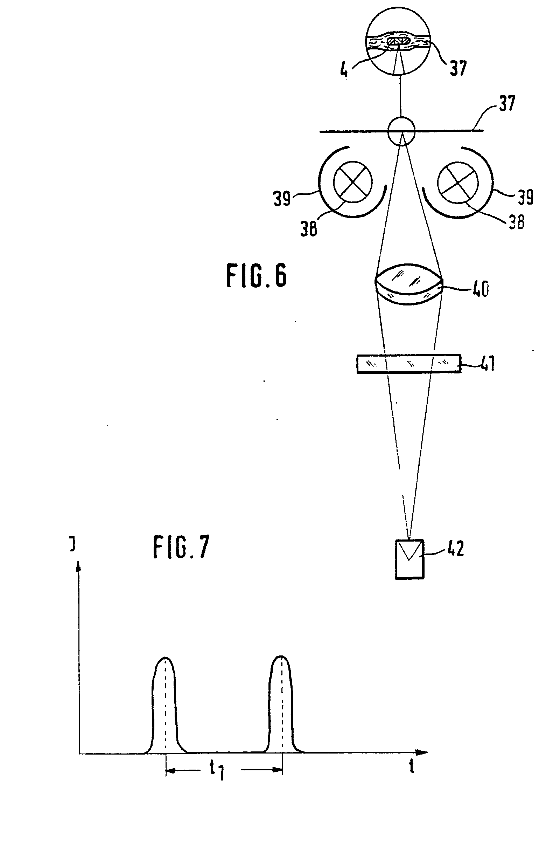

Die Fig. 6 zeigt in schematischer Form ein bevorzugtes Ausführungsbeispiel für eine Prüfvorrichtung, mit der eine Prüfung des im Beispiel 1 beschriebenen Fadens möglich ist. Gemäß Beislpiel 1 handelt es sich um einen Dreikomponentenfaden, dessen Randstreifen europiumaktivierte Chelate enthalten und dessen Mittelzone nicht aktiv ist.

Das mit konstanter Gewschwindigkeit an der Prüfvorrichtung vorbeigeführte, den Sicherheitsfaden 4 enthaltende Dokument 37 (Banknote), wird von zwei UV-Röhrenlampen 38 mit Schwarzglaskolben (z.B. Sylvania F4T5BLB) beleuchtet, wobei die aktivierten Zonen des Sicherheitsfadens zur Lumineszenz angeregt werden. Die Reflektoren 39 dienen zur Verstärkung der anregenden Strahlungsintensität und zur Abschirmung der Lampenstrahlung von den weiteren Komponenten 40—42.

Die Probenebene wird durch ein Objektiv 40 (z.B. Spindler & Hoyer; f = 20 mm, $\varnothing$ 10 mm) im Verhältnis 1:10 vergrößert auf eine streifenförmige ca. 1 mm breite Siliziumzelle 42 (z.B. Hamamatsu S875—16R) abgebildet. Damit hat das Nachweissystem in Laufrichtung der Probe eine Auflösung von etwa 0,1 mm.

Die Lumineszenzstrahlung des Sicherheitsfadens fällt durch ein schmalbandiges optisches Filter (Interferenzfilter) 41. Mit dessen Durchlaßbereich von 605 nm bis 625 nm und einer Blockung der spektralen Randbereiche von 200 nm bis 1200 nm wird die Empfindlichkeit der optischen Anordnung auf den schmalen Bereich der Europiumemissionslinie beschränkt, so daß die Umlichtempfindlichkeit weitgehend eliminiert wird.

Fig. 7 zeigt den im Sensor 42 empfangenen zeitlichen Verlauf dieser Emissionsintensität. Mit Hilfe des Photodetektors 42 wird die beim Durchgang durch die Prüfvorrichtung entstehende Emission eines Sicherheitsfadens, der beispielsweise 0,8 mm breit ist und dessen 0,2 mm breite Randzonen (Europiumchelat) detektiert. Der zeitliche Abstant $t_1$ der beiden "Peaks" beträgt 0,6 mm dividiert durch die Laufgeschwindigkeit der Banknote.

Damit dienen als Größen für die Belegung der Echtheit der Sicherheitsfäden sowohl die speziellen physikalischen (fluoreszierenden) Eigenschaften, als auch das gezielte, lokale Vorliegen dieser Eigenschaften in bestimmten Bereichen und der Abstand zwischen diesen Bereichen.

Für die Prüfung der in den Beispielen 2 und 3 gezeigten Ausführungsformen ist die Anreggungslichtquelle bzw. die Detektoroptik den jeweiligen speziellen Fluoreszenzeigenschaften anzupassen.

Zur Prüfung des in Beispiel 4 beschreibenen magnetischen Sicherheitsfadens durchläuft das Dokument zunächst eine Magnetisierungsstation und wird dann an einem Magnetkopf vorbeigeführt. Dieser Magnetkopf, der ähnlich wie ein Tonbandmagnetkopf aufgebaut ist, hat eine Spaltbreite von ca. 0,05 mm. Man erhält mit einem solchen Magnetkopf ein höheres Signal als mit Originaltonköpfen, die einen zehnmal kleineren Spalt haben.

Eine Dokument mit dem eingelagerten Sicherheitsfaden wird an dem Magnetkopf vorzugsweise berührend vorbeigeführt. Der durch die Einbettung des Sicherheitsfadens in Papier hervorgerufene Magnetkopfabstand sollte einen Abstand zum Sicherheitsfaden von 0,1 mm nicht übersteigen. Die von den mit Magnetpigment ausgestatteten Randzonen des erfindungsgemäßen Sicherheitsfadens erzeugten Signale werden analog wie im vorherigen Beispiel ausgewertet.

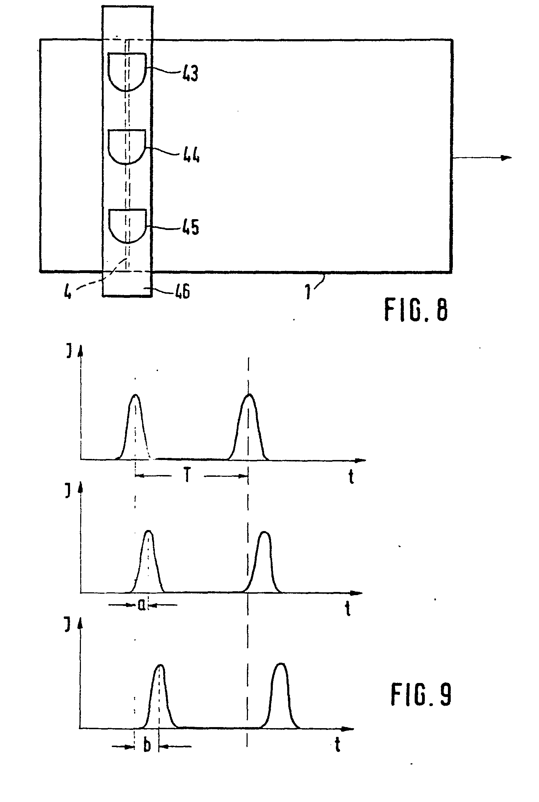

Vorzugsweise enthalten die Prüfvorrichtungen mehrere in einer Linie mit dem zu prüfenden Sicherheitsfaden liegende Sensorköpfe, wie in Fig. 8 angedeutet. Diese Sensorköpfe 43—45 sind auf einem gemeinsamen Träger 46 angeordnet, der vertikal zur Banknotenlaufrichtung (Pfeil) befestigt ist. Im Zusammenhang mit einer Ermittlung der Lage der Banknote mittels entsprechender Lagesensoren kann damit festgestellt werden, ob der Sicherheitsfaden innerhalb der Banknote exakt parallel zu den kurzen Kanten der Banknote verläuft, denn in diesem Fall erscheinen alle Ausgangssignale zum gleichen Zeitpunkt.

Bei einem Transport der Banknote in Schräglage erscheinen die Ausgangssignale der einzelnen Sensoren zeitversetzt (Fig. 9). Eine dadurch bedingte verfälschte Abstandsmessung — der zeitliche Abstand T zwischen den Meßsignalen ist größer und damit auch der daraus ermittelte geometrische Abstand — kann durch eine Korrelation des gemessenen Abstandwertes mit den Daten a, b der zeitlichen Versetzung korrigiert werden.

Eine für die Prüfung eines Sicherheitsfadens, dessen Komponenten verschiedene physikalische Eigenschaften besitzen, geeignete Prüfvorrichtung enthält mehrere den unterschiedlichen Eigenschaften angepaßte Sensorköpfe, deren Anzahl zumindest gleich der Zahl der Komponenten ist.

Jeder dieser Sensoren ist dabei auf die Erkennung einer bestimmten Eigenschaft ausgerichtet. Liegen die Sensoren auf einer Linie mit dem durchlaufenden Sicherheitsfaden, so müssen die Ausgangssignale der Sensoren in unterschiedlichen, aber vorbestimmten Zeitpunkten erscheinen. Über die Auswertung des zeitlichen Erscheinens der verschiedenen Signale lassen sich der Aufbau, die Lagen der verschiedenen Komponenten und deren Abstand voneinander bestimmen.

Soll z.B. ein dreikomponentiger Sicherheitsfaden, dessen Randbereiche rot fluoreszieren, der Mittelbereich jedoch gelb, gemäß Beispiel 5, so ist es z.B. vorteilhaft, die in der Fig. 8 gezeigten Sensoren 43 und 45 auf die Erkennung der roten Fluoreszenz abzustimmen, während der Sensor 44 die gelbe Fluoreszenz detektiert. Neben der bereits erwähnten Abstandsmessung zwischen den Randstreifen kann damit auch die spezielle Fluoreszenz des Mittelstreifens geprüft werden.

Unterscheiden sich die Fluoreszenzstoffe im Mittelstreifen und in den Randstreifen lediglich in ihren unterschiedlichen Abklingzeiten, so können diese Zeiten durch eine seitliche Versetzung bestimmter Sensoren in Banknotenlaufrichtung geprüft werden. Zum Beispiel wird für den Mittelstreifen ein Luminophor mit einer kurzen Abklingzeit gewählt, für die Randstreifen dagegen ein Luminophor mit einer langen Abklingzeit. In der Prüfvorrichtung nach Fig. 8 werden dann die Sensoren 43 und 45 derart seitlich versetzt, daß die Emission des Mittelstreifens bereits abgeklungen ist, wenn der Sicherheitsfaden an diesen Sensoren vorbeitransportiert wird. Der Sensor 44 liefert dann ein Signal, das ein Maß für die gesamte Breite des Sicherheitsfadens ist, während die Sensoren 43 und 45 das in Fig. 7 gezeigte signal liefern, aus dem der Abstand der Randstreifen bzw. die Breite des Mittelstreifens bestimmbar ist.

In einer Prüf und Sortiervorrichtung für die erfindungsgemäßen Dokumente können z.B. auch zwei oder mehr Prüfvorrichtungen gemäß Fig. 8 eingesetzt werden, wobei eine Vorrichtung z.B. auf die Erkennung der visuellen, z.B. farblichen Gestaltung, des Fadens ausgerichtet ist, während die andere auf das Vorliegen nicht visuell sichtbarer physikalischer Eigenschaften der verschiedenen Bereiche des Sicherheitsfadens abgestimmt ist.

Die coextrudierten oder aus Einzelfäden zusammengesetzten Mehrkomponentenfäden können eventuell nach einer zusätzlichen Weiterbehandlung (Beschichten, Bedampfen, Bedrukken etc.) auf vielfältige Weise in Sicherheitsdokumente eingesetzt werden. Da die einzelnen Komponenten des erfindungsgemäßen Sicherheitsfadens vorzugsweise unterschiedlich gefärbt sind, ist es vorteilhaft, den Faden so einzulagern, daß er zumindest partiell direkt sichtbar ist. Die Einbringung der Sicherheitsfäden in das Sicherheitspapier kann dabei nach den in den Druckschriften DE—C—341 970 oder DE—C—274 319 beschriebenen Verfahren erfolgen.

Bei Ausweiskarten, die meist aus mehreren Kunststoffschichten bestehen, bietet es sich an, den Faden unter einer transparenten Deckschicht einzulagen, so daß er über seine ganze Länge voll sichtbar ist. Für den Sicherheitsfaden werden vorzugsweise Kunststoffmaterialien verwendet, deren Erweichungspunkte über denen der Kartenschichtmaterialien liegen. Die Kartenschichten können dann, wie allgemein üblich, unter Anwendung von Wärme und Druck miteinander verschmolzen werden, ohne den Sicherheitsfaden zu beschädigen.

Ohne Beeinträchtigung der erfindungsgemäßen Eigenschaften des Sicherheitsfadens können die Materialien und der Kaschiervorgang so aufeinander abgestimmt werden, daß der Faden beim Kaschiervorgang lediglich im Oberflächenbereich erweicht und damit eine feste Verbindung zwischen dem Faden und den angrenzenden Kunststoffschichten erzielt wird.

Zur Erhöhung der Fälschungssicherheit von Kunststoffkarten ist es bekannt, in diese Karten ein sicherheitstechnisch hochwertiges Wertpapierinlett einzubringen. Unter Verwendung des erfindungsgemäßen Wertpapiers mit einem eingelagerten Mehrkomponentenfaden läßt sich auch bei dieser Anordnung die Fälschungssicherheit noch weiter erhöhen.

**Patentansprüche**

1. Sicherheitsdokument mit einem im Inneren des Dokuments eingelagerten Sicherheitsfaden, der visuelle im Auf- und Durchlicht erkennbar ist und mindestens zwei in Fadenlängsrichtung verlaufenden, direkt aneinandergrenzende Bereiche aufweist, die durch die materielle Zusammensetzung bedingte, unterschiedliche physikalische Eigenschaften aufweisen, wobei sich die Bereiche über die gesamte Fadenlänge erstrecken, dadurch gekennzeichnet, daß die Bereiche in der Ebene des Sicherheitsdokuments und nebeneinander angeordnet sind ihre geometrische Anordnung erkennbar und/oder zerstörungsfrei meßbar ist.

2. Sicherheitsdokument nach Anspruch 1, dadurch gekennzeichnet, daß die Bereiche ein unterschiedliches spektrales Remissions-/Transmissionsvermögen aufweisen.

3. Sicherheitsdokument nach Anspruch 1, dadurch gekennzeichnet, daß die Bereiche unterschiedliche Fluoreszenziegenschaften aufweisen.

4. Sicherheitsdokument nach Anspruch 1, dadurch gekennzeichnet, daß die Bereiche unterschiedliche magnetische und/oder elektrische Eigenschaften aufweisen.

5. Sicherheitsdokument nach den Ansprüchen 1 bis 4, dadurch gekennzeichnet, daß die Bereiche sich durch visuell sichtbare und nicht visuell erkennbare physikalische Eigenschaften unterscheiden.

6. Sicherheitsdokument nach Anspruch 3, dadurch gekennzeichnet, daß mindestens zwei direkt benachbarte Bereiche Fluoreszenzstoffe enthalten, wobei das Emissionslicht des Fluoreszenzstoffes eines Bereichs den Fluoreszenzstoff des benachbarten Bereichs zur Emission anregt.

7. Sicherheitsdokument nach den Ansprüchen 1 bis 6, dadurch gekennzeichnet, daß der Sicherheitsfaden drei in Fadenlängsrichtung verlaufende Bereiche aufweist, wobei die äußeren Bereiche wenigstens eine vom mittleren Bereich abweichende physikalische Eigenschaft besitzen.

8. Sicherheitsdokument nach Anspruch 7, dadurch gekennzeichnet, daß die äußeren Bereiche die gleiche physikalische Eigenchaft besitzen.

9. Sicherheitsdokument nach Anspruch 1 bis 8, dadurch gekennzeichnet, daß der Sicherheitsfaden ein mittels bekannter Coextrusionstechnik hergestellter Mehrkomponenten-Kunststoffaden ist.

10. Sicherheitsdokument nach Anspruch 1 bis 9, dadurch gekennzeichnet, daß der Sicherheitsfaden aus mehreren fest miteinander verbundenen Einzelfäden besteht.

11. Sicherheitsdokument nach Anspruch 10, dadurch gekennzeichnet, daß die Einzelfäden extrudierte Kunststoffäden sind.

12. Sicherheitsdokument nach den Ansprüchen 9 oder 10, dadurch gekennzeichnet, daß die einzelnen Komponenten des Mehrkomponentenfadens aus einem Polymer oder Polymergemisch bestehen, die mit verschiedenen, bestimmte physikalische Eigenschaften vermittelnde, Zusätzen versehen sind.

13. Sicherheitsdokument nach Anspruch 1, dadurch gekennzeichnet, daß der Sicherheitsfaden so in das Dokument eingebracht wird, daß er zumindest partiell direkt sichtbar ist.

14. Sicherheitsdokument nach Anspruch 13, dadurch gekennzeichnet, daß der Sicherheitsfaden partiell an der Oberfläche des Sicherheitsdokuments liegt.

15. Sicherheitsdokument nach Anspruch 13, dadurch gekennzeichnet, daß der Sicherheitsfaden im Sicherheitsdokument unter einer transparenten Deckfolie eingelagert ist.

16. Verfahren zur Herstellung eines Sicherheitsdokuments nach Anspruch 10 oder 11, gekennzeichnet durch folgende Schritte:

Herstellen mehrerer einzelner Fäden,

Aufbringen der einzelnen Fäden in direktem Kontakt auf ein Förderband,

Transport dieser Fäden auf dem Förderband in eine Kaschieranlage,

Verschweißen dieser Einzelfäden zu einem Mehrkomponentenfaden,

Einlagerung dieser Fäden in das Sicherheitsdokument.

17. Verfahren zur Prüfung eines Sicherheitsdokuments nach Anspruch 1, dadurch gekennzeichnet, daß

das Sicherheitsdokument mit konstanter Geschwindigkeit an einer Prüfvorrichtung vorbeitransportiert wird, wobei das Sicherheitsdokument so angeordnet ist, daß der Sicherheitsfaden senkrecht zur Transportrichtung liegt,

mit Hilfe eines oder mehrerer Sensoren die physikalische Eigenschaft einzelner Bereiche und deren zeitliches Erscheinen beim Durchgang durch die Prüfvorrichtung festgestellt wird und

aufgrund des zeitlichen Abstands der von den verschiedenen Bereichen kommenden Pfüfsignale die geometrische Anordnung der Bereiche auf dem Sicherheitsfaden bestimmt und mit einem vorgegebenen Wert verglichen wird.

18. Verfahren nach Anspruch 17, dadurch gekennzeichnet, daß die physikalischen Eigenschaften der verschiedenen Bereiche mit Hilfe mehrerer Sensoren festgestellt werden, die in einer Linie parallel zum Sicherheitsfadern angeordnet sind.

19. Verfahren nach Anspruch 18, dadurch gekennzeichnet, daß mittels eines Lagedetektors die Lage des Sicherheitsdokuments beim Durchgang durch die Prüfvorrichtung festgestellt wird, daß mit Hilfe mindestens zweier Sensoren, die auf die Erkennung der gleichen physikalischen Eigenschaft adaptiert sind, das Vorliegen der vorgegebenen physikalischen Eigenschaften festgestellt wird, daß das zeitliche Erscheinen der von diesen Sensoren gelieferten Prüfsignale in Relation mit den vom Lagedetektor gelieferten Signale mit vorgegebenen Werten verglichen wird.

20. Verfahren nach Anspruch 18, dadurch gekennzeichnet, daß mit Hilfe mindestens zweier Sensoren, die auf die Erkennung der gleichen physikalischen Eigenschaft adaptiert sind, das Vorhandensein der vorgegebenen physikalischen Eigenschaft festgestellt wird bei Auftreten einer Diskrepanz in der zeitlichen Abfolge der von diesen Sensoren kommenden Prüfsignale ein Korrektursignal erzeugt wird und dieses Signal in die Ermittlung der geometrischen Anordnung der Bereiche auf den Sicherheitsfaden miteinbezogen wird.

**Revendications**

1. Document de sécurité dont l'intérieur comporte un fil de sécurité incorporé qui est susceptible d'être identifié, au moyen d'un éclairage par le dessus et d'un éclairage par transparence, fil qui présente au moins deux zones contiguës disposées dans le sens longitudinal du fil, lesquelles présentent des propriétés physiques différentes inhérentes à leur composition matérielle, les zones s'allongeant sur toute la longueur du fil, caractérisé en ce que les zones sont disposées les unes à côté des autres dans le plan du document de sécurité et que leur disposition géométrique peut être identifiée et/ou mesurée sans destruction.

2. Document de sécurité selon la revendication 1, caractérisé en ce que les zones présentent un pouvoir de réflexion ou de transmission spectrale différents.

3. Document de sécurité selon la revendication 1, caractérisé en ce que les zones présentent des caractéristiques de fluorescence différentes.

4. Document de sécurité selon la revendication 1, caractérisé en ce que les zones présentent des propriétés magnétiques et/ou électriques différentes.

5. Document de sécurité selon les revendications 1 à 4, caractérisé en ce que les zones se distinguent par des propriétés physiques visibles à l'oeil nu et par des propriétés physiques qui ne peuvent pas être détectées visuellement.

6. Document de sécurité selon la revendication 3, caractérisé en ce qu'au moins deux zones contiguës contiennent des matières fluorescentes, la lumière d'émission de la matière fluorescente d'une zone excitant la matière fluorescente de la zone voisine de telle sorte que celle-ci présente une émission.

7. Document de sécurité selon les revendications 1 à 6, caractérisé en ce que le fil de sécurité présente trois zones allongées dans le sens longitudinal du fil, les zones extérieures possédant au moins une propriété physique qui diffère de celle de la zone du milieu.

8. Document de sécurité selon la revendication 7, caractérisé en ce que les zones extérieures possèdent la même propriété physique.

9. Document de sécurité selon les revendications 1 à 8, caractérisé en ce que le fil de sécurité est un fil à plusieurs composants en matière plastique fabriqué selon la technique connue de co-extrusion.

10. Document de sécurité selon les revendications 1 à 9, caractérisé en ce que le film de sécurité est constitué par plusieurs fils individuels solidement liés entre eux.

11. Document de sécurité selon la revendication 10, caractérisé en ce que les fils individuels sont des fils de matière plastique extrudés.

12. Document de sécurité selon les revendications 9 ou 10, caractérisé en ce que les différents composants du fil à plusieurs composants sont constitués par un polymère ou par un mélange de polymères qui comportent des additifs qui leur confèrent des propriétés physiques déterminées différentes.

13. Document de sécurité selon la revendication 1, caractérisé en ce que le fil de sécurité est mis en place dans le document de manière telle qu'il soit directement visible au moins partiellement.

14. Document de sécurité selon la revendication 13, caractérisé en ce que le fil de sécurité est situé partiellement à la surface du document de sécurité.

15. Document de sécurité selon la revendication 13, caractérisé en ce que le fil de sécurité est incorporé dans le document de sécurité sous une feuille de couverture transparente.

16. Procédé pour la fabrication d'un document de sécurité selon la revendication 10 ou 11, caractérisé par les opérations suivantes:

fabrication de plusieurs fils individuels;

mise en place de ces fils individuels de manière à ce qu'ils soient en contact étroit avec une bande transporteuse;

transport de ces fils placés sur la bande transporteuse vers une installation de laminage;

soudage entre eux de ces fils individuels en vue de former un fil à plusieurs composants;

incorporation de ces fils dans le document de sécurité.

17. Procédé de vérification d'un document de sécurité selon la revendication 1, caractérisé en ce que:

le document de sécurité est transporté et passe à vitesse constante devant le dispositif de vérification, le document de sécurité étant disposé de façon telle que le fil de sécurité soit placé perpendiculairement à la direction du mouvement de transport;

les propriétés physiques des zones individuelles constituant le fil et leur apparition dans le temps lors du passage dans le dispositif de vérification sont constatées à l'aide d'un ou de plusieurs capteurs;

on détermine, sur la base de l'écart de temps entre les signaux de vérification provenant des différentes zones, la disposition géométrique des zones du fil de sécurité et on la compare avec une valeur préétablie.

18. Procédé selon la revendication 17, caractérisé en ce que les propriétés physiques des différentes zones sont constatées à l'aide de plusieurs capteurs qui sont disposés en ligne parallèlement au fil de sécurité.

19. Procédé selon la revendication 18, caractérisé en ce qu'au moyen d'un détecteur de position on constate la position du document de sécurité lors de son passage dans le dispositif de vérification, qu'à l'aide d'au moins deux capteurs qui sont aptes à identifier la même propriété physique, on constate la présence effective de propriétés physiques déterminées à l'avance, que l'instant d'apparition des signaux de vérification délivrés par ces capteurs est comparée, à l'aide des signaux délivrés par le détecteur de position, à des valeurs préétablies.

20. Procédé selon la revendication 18, caractérisé en ce qu'à l'aide d'au moins deux capteurs qui sont aptes à identifier la même propriété physique, on constate la présence effective de la propriété physique déterminée à l'avance, que lors de l'apparition d'un décalage dans la séquence temporelle des signaux de vérification provenant de ces capteurs, un signal de correction est produit, et que ce signal est pris en compte pour la recherche de la disposition géométrique des zones sur le fil de sécurité.

**Claims**

1. Security document with a security thread embedded in the interior of the document, the thread being recognisable visually in incident and transmitted light and having at least two directly mutually adjacent regions extending in the direction of the length of the thread, which regions, by virtue of the composition of the material, have different physical characteristics, the regions extending over the whole length of the thread, characterised in that the regions are arranged next to one another in the plane of the security document and their geometric disposition is recognisable and/or measurable in a non-descructive manner.

2. Security document according to Claim 1 characterised in that the regions have a different sepctral reflection/transmission ability.

3. Security document according to Claim 1 characterised in that the regions have different fluorescent characteristics.

4. Security document according to Claim 1 characterised in that the regions have different magnetic and/or electrical characteristics.

5. Security document according to Claims 1 to 4 characterised in that the regions are distinguished by visually recognisable and non-visually recognisable physical characteristics.

6. Security document according to Claim 3 characterised in that at least two directly adjacent regions contain fluorescent materials, the emitted light from the fluorescent material of one region exciting the fluorescent material of the adjacent region.

7. Security document according to Claims 1 to 6 characterised in that the security thread comprises three regions extending in the direction of the length of the thread, the outer regions having at least one physical characteristic differing from the central region.

8. Security document according to Claim 7 characterised in that the outer regions have the same physical characteristic.

9. Security document according to Claims 1 to 8 characterised in that the security thread is a multi-component plastics thread produced by means of a known co-extrusion technique.

10. Security document according to Claim 1 to 10 characterised in that the security thread comprises several individual threads permanently joined together.

11. Security document according to Claim 10 characterised in that the individual threads are extruded plastics threads.

12. Security document according to Claims 9 or 10 characterised in that the individual components of the multi-component thread comprise a polymer or mixture of polymers which are provided with additives producing different predetermined physical characteristics.

13. Security document according to Claim 1 characterised in that the security thread is introduced into the document in such a way that it is at least partially directly visible.

14. Security document according to Claim 13 characterised in that the security thread lies partially at the surface of the security document.

15. Security document according to Claim 13 characterised in that the security thread is embedded in the security document below a transparent covering film.

16. Method of manufacturing a security document according to Claim 10 or 11 characterised by the following steps:

the manufacture of a number of individual threads,

the placing of the individual threads in direct contact on a conveyor belt,

the transport of these threads on the conveyor belt into a laminating installation,

the welding of these individual threads together to form a multi-component thread,

the embedding of these threads in the security document.

17. Method of testing a security document according to Claim 1 characterised in that:

the security document is carried at constant speed past a testing device, the document being so arranged that the security thread lies perpendicular to the direction of travel,

with the aid of one or more sensors the physical characteristic of individual regions and their occurrence in time is determined by passage through the testing device and

on the basis of the time interval between the test signals coming from the different regions the geometical disposition of the regions on the security thread is determined and compared with a predetermined value.

18. Method according to Claim 17 characterised in that the physical characteristics of the different regions are determined with the aid of a number of sensors which are arranged in a line parallel to the security thread.

19. Method according to Claim 18 characterised in that by means of a position detector the position of the security document as it passes through the testing device is determined, that with the aid of at least two sensors which are adapted to recognise the same physical characteristic the presence of the predetermined physical characteristics is determined, that the appearance in time of the test signals delivered by these sensors is compared with predetermined values in relation to the signals delivered by the position detector.

20. Method according to Claim 18 characterised in that with the aid of at least two sensors which are adapted to recognise the same physical characteristic the presence of the predetermined physical characteristic is determined, on the occurrence of a discrepancy in the time sequence of the test signals coming from these sensors a correction signal is produced and this signal is included in the determination of the geometrical arrangement of the regions on the security thread.

FIG. 1

FIG. 2

FIG. 3

FIG. 4

a)   b)   c)   d)   e)

FIG. 5

FIG.6

FIG.7

EP 0 185 396 B1

FIG. 8

FIG. 9

4